# EUROPEAN PATENT APPLICATION

(11) **EP 3 828 690 A1**
(43) Date of publication of application: **02.06.2021**
(21) Application number: 19852607.1
(22) Date of filing: 22.08.2019
(51) Int. Cl.: G06F 3/14, G06F 3/041, G06F 3/16, G06F 21/32, G06Q 50/10, H04N 21/422, H04N 21/2381, G06Q 30/06

(54) **CONTROL DEVICE**

(30) Priority: 24.08.2018 KR 20180099300; 23.10.2018 KR 20180126791
(71) Applicant: Samsung Display Co., Ltd., Yongin-si, Gyeonggi-Do 17113 (KR)
(72) Inventor: KIM, Hyunjung, Seongnam-Si Gyeonggi-do 13644 (KR); KWAG, Jinoh, Suwon-Si Gyeonggi-do 16687 (KR)
(74) Representative: Walaski, Jan Filip
(86) International application number: PCT/KR2019/010723
(87) International publication number: WO 2020/040579

(57) **Abstract**

Provided is a controller including an input module configured to receive a content request, a control unit configured to determine content based on the content request, a communication unit configured to receive data corresponding to the content from a first external device and search for content information based on the data, a display panel configured to display a search result for the content request, a sensor unit configured to receive user authentication information, and a memory configured to store the user authentication information and an address corresponding to the user authentication information, wherein the communication unit transmits the search result to the address.

## Description

### TECHNICAL FIELD

The present disclosure herein relates to a controller capable of short-range communication and long-distance communication.

### BACKGROUND ART

A user may encounter various contents through various electronic devices such as a display device displaying an image or an audio device outputting audio. In order to obtain information on the content, there is cumbersome that users have to memorize the content and obtain information on the content through Internet search or inquiries to people around.

### DISCLOSURE OF THE INVENTION

### TECHNICAL PROBLEM

The present disclosure relates to a controller that enables short-range communication and long-distance communication to search for content information in real time.

### TECHNICAL SOLUTION

Embodiments of the inventive concept provide a controller including: an input module configured to receive a content request; a control unit configured to determine content based on the content request; a communication unit configured to receive data corresponding to the content from a first external device and search for content information based on the data; a display panel configured to display a search result for the content request; a sensor unit configured to receive user authentication information; and a memory configured to store the user authentication information and an address corresponding to the user authentication information, wherein the communication unit transmits the search result to the address.

The input module may include at least one of an input detection unit and an audio input module.

The data may be at least one of sound data, still image data, and video data.

The user authentication information is at least one of ID and password, fingerprint, voice, face, iris, and blood vessel.

The sensor unit may include at least one of a camera module, an input detection unit, a fingerprint detection unit, and an audio input module.

The address may be an email address, a mobile phone number, or second external device access information.

The second external device access information may be IP information, Wi-Fi access information, or Bluetooth access information.

The memory may further store user interface information corresponding to the user authentication information.

The first external device may display an image of a first channel, and the display panel may display an image of a second channel different from the first channel.

The controller may further include an audio output module for outputting sound, wherein the audio output module outputs the sound of the second channel

The first external device and the display panel may display the same image.

The first external device may display an image of a first channel, and the display panel may display a caption of the first channel.

The communication unit may transmit a control signal to a second external device, and the second external device may be a temperature control device, a lighting device, or a sound output device.

The first external device may be a display device, and the display device may communicate with a set-top box.

An image corresponding to the image data may be displayed on the display panel by receiving image data from the set-top box before the first external device is turned on.

The first external device may be a set-top box.

The display panel may be a flexible display panel.

The display panel may be a stretchable display panel.

In other embodiments of the inventive concept, a controller includes: an input module configured to receive a user's request; a control unit configured to determine content based on the request; a short-range communication unit configured to receive data corresponding to the content from a first external device; a long-range communication unit configured to search for content information based on the data; and a display panel configured to output the search result.

The controller may further include: a sensor unit configured to receive user authentication information; and a memory configured to store the user authentication information and an address corresponding to the user authentication information, wherein the short-range communication unit or the long-range communication unit transmits the search result to the address.

### ADVANTAGEOUS EFFECTS

The controller according to the inventive concept is capable of short-range communication and long-distance communication. Accordingly, the controller may receive data corresponding to the content from an external device and search for the data. That is, the process of obtaining information on the content may be easier. Also, the controller may transmit the searched content information to an address corresponding to the user authentication information. The address may be set by an individual such as access information of an external device, a mobile phone number, or an email address. Accordingly, the control device transmits the searched content information to another external device through user authentication, and the user may easily access the content information from the other external device.

### BRIEF DESCRIPTION OF THE DRAWINGS

FIG. 1 shows an example of using a controller according to an embodiment of the inventive concept.
FIG. 2 is a block diagram of the controller illustrated in FIG. 1 by way of example.
FIG. 3A is a diagram illustrating a user interface of a controller according to an embodiment of the inventive concept.
FIG. 3B is a diagram illustrating a user interface of a controller according to an embodiment of the inventive concept.
FIG. 4 is a perspective view of a controller according to an embodiment of the inventive concept.
FIG. 5 is a perspective view of a controller according to an embodiment of the inventive concept.
FIG. 6 is a perspective view of a controller according to an embodiment of the inventive concept.
FIG. 7 is a perspective view of a controller according to an embodiment of the inventive concept.
FIG. 8 is a flowchart showing the operation steps of a controller according to an embodiment of the inventive concept.
FIG. 9 is a state diagram illustrating an operation example of a controller according to an embodiment of the inventive concept.
FIG. 10A is a state diagram illustrating an operation example of a controller according to an embodiment of the inventive concept.
FIG. 10B is a state diagram illustrating an operation example of a controller according to an embodiment of the inventive concept.
FIG. 11 is a state diagram illustrating an operation example of a controller according to an embodiment of the inventive concept.
FIG. 12 is a state diagram illustrating an operation example of a controller according to an embodiment of the inventive concept.
FIG. 13 is a state diagram illustrating an operation example of a controller according to an embodiment of the inventive concept.
FIG. 14 is a state diagram illustrating an operation example of a controller according to an embodiment of the inventive concept.
FIG. 15 is a state diagram illustrating an operation example of a controller according to an embodiment of the inventive concept.
FIG. 16 shows an example of using a controller according to an embodiment of the inventive concept.
FIG. 17 shows an example of using a controller according to an embodiment of the inventive concept.
FIG. 18 illustrates a controller according to an embodiment of the inventive concept.

### MODE FOR CARRYING OUT THE INVENTION

In this specification, when an element (or region, layer, part, etc.) is referred to as being "on", "connected to", or "coupled to" another element, it means that it may be directly placed on/connected to /coupled to other components, or a third component may be arranged between them.

Like reference numerals refer to like elements. Additionally, in the drawings, the thicknesses, proportions, and dimensions of components are exaggerated for effective description.

"And/or" includes all of one or more combinations defined by related components.

It will be understood that the terms "first" and "second" are used herein to describe various components but these components should not be limited by these terms. The above terms are used only to distinguish one component from another. For example, a first component may be referred to as a second component and vice versa without departing from the scope of the inventive concept. The terms of a singular form may include plural forms unless otherwise specified.

Unless otherwise defined, all terms (including technical and scientific terms) used herein have the same meaning as commonly understood by one of ordinary skill in the art to which this inventive concept belongs. In addition, terms defined in a commonly used dictionary should be interpreted as having a meaning consistent with the meaning in the context of the related technology, and unless interpreted in an ideal or overly formal sense, the terms are explicitly defined herein.

In various embodiments of the inventive concept, the term "include," "comprise," "including," or "comprising," specifies a property, a region, a fixed number, a step, a process, an element and/or a component but does not exclude other properties, regions, fixed numbers, steps, processes, elements and/or components.

Hereinafter, embodiments of the inventive concept will be described with reference to the drawings.

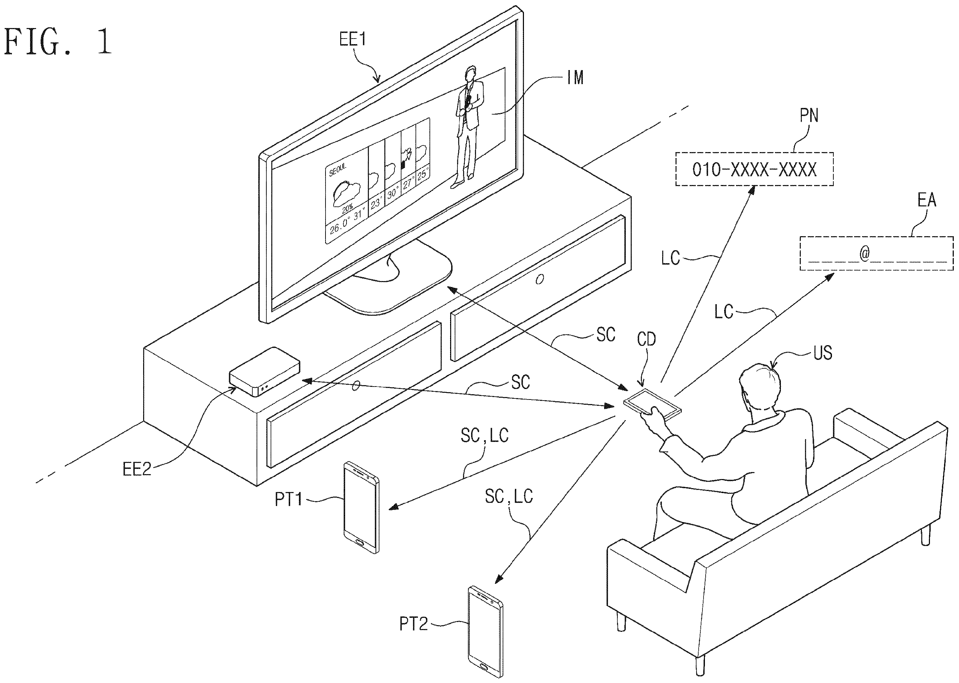

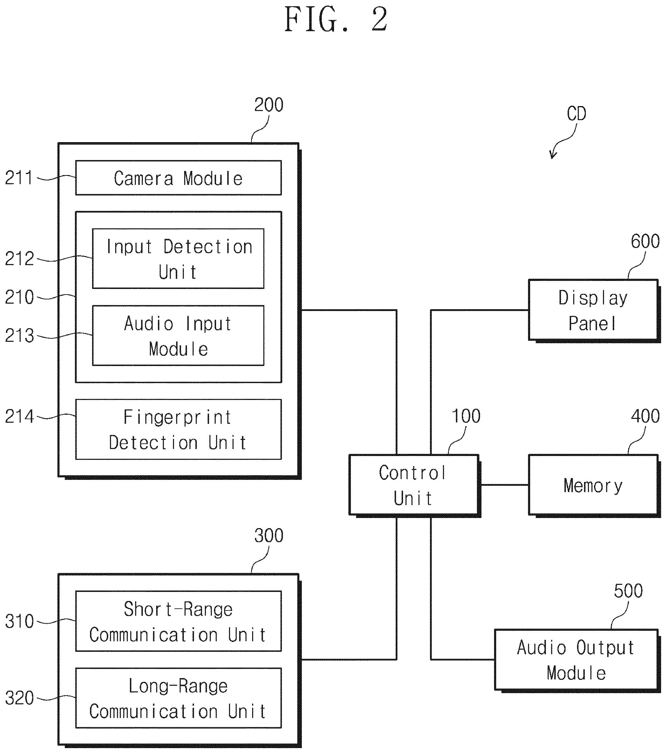

FIG. 1 shows an example of using a controller according to an embodiment of the inventive concept. FIG. 2 is a block diagram of the controller illustrated in FIG. 1 by way of example.

Referring to FIGS. 1 and 2, a first external device EE1, a second external device EE2, and a controller CD are illustrated.

The first external device EE1 may be a display device such as a television or a monitor. The display device may be, for example, a liquid crystal display device, an organic light-emitting display device, a quantum dot display device, or a micro LED display device. However, this is only an example, and the type of display device is not limited to the example. The first external device EE1 may display an image IM. In FIG. 1, a screen for transmitting weather information is illustrated as an example of the image IM.

The second external device EE2 may be a set-top box. The second external device EE2 is a device capable of communicating with the first external device EE1. The second external device EE2 may provide image data received from the outside to the first external device EE1. The second external device EE2 is a home communication terminal for interactive multimedia communication and may play a role of connecting the first external device EE1 and an external network.

When there is no second external device EE2, the first external device EE1 may display only images provided by some channels. However, when there is the second external device EE2, the first external device EE1 may display images provided by a large number of channels.

The controller CD may control at least one of the first external device EE1 and the second external device EE2. For example, the user US may turn on or turn off at least one of the first external device EE1 and the second external device EE2 using the controller CD. Also, the user US may change a channel provided by the first external device EE1 using the controller CD. The user US may adjust the volume provided by the first external device EE1 using the controller CD. That is, the controller CD may be understood as a remote controller or a device including a remote control function.

In addition, the controller CD according to an embodiment of the inventive concept may search for content information based on data received from the first external device EE1 and/or the second external device EE2, and output the search result. Further, the controller EE1 may transmit the search result to an address corresponding to the user authentication information of the user US. Hereinafter, the controller CD will be described.

The controller CD may include a control unit 100, a sensor unit 200, a communication unit 300, a memory 400, an audio output module 500, and a display panel 600. The components constituting the controller CD are merely examples, and the controller CD may further include other components, for example, a battery unit, a charging unit, or a position sensor in addition to the components disclosed in FIG. 2.

The control unit 100 may control the overall operation of the controller CD. The control unit 100 may be a module that controls the sensor unit 200, the communication unit 300, the memory 400, the audio output module 500, and the display panel 600. For example, the control unit 100 may be a central processing unit (CPU), a micro processor unit (MPU), or an execution processing unit (EPU).

The sensor unit 200 may receive user authentication information of the user US. The user authentication information may be ID and password or bio information. The bio information may be, for example, a fingerprint, an iris, a voice, a face, or a blood vessel. However, this is exemplary, and user authentication information is not limited to the above example.

The sensor unit 200 may include at least one of a camera module 211, an input detection unit 212, an audio input module 213, and a fingerprint detection unit 214. The iris or face information of the user US may be acquired through the camera module 211. An ID and a password, or fingerprint information of the user US may be acquired through the input detection unit 212. The voice of the user US may be acquired through the audio input module 213. Fingerprint information of the user US may be acquired through the fingerprint detection unit 214. The fingerprint detection unit 214 may be provided integrally with the input detection unit 212 or may be provided separately.

The input module 210 may receive a request from the user US. At least some of the configuration of the sensor unit 200 may be referred to as the input module 210. For example, the input detection unit 212 and the audio input module 213 may be the input module 210. For example, the user US may input a request through a keyboard provided to the input detection unit 212, and the user US may input a request through a voice command to the audio input module 213.

The input detection unit 212 may detect an external input. The external input includes various types of external inputs such as a part of the user's body, a stylus pen, light, heat, or pressure. In addition, it is possible to detect not only a touch that a part of the body such as a user's hand contacts, but also a close or adjacent spatial touch (e.g., hovering). A method that the input detection unit 212 detects a touch may include various methods, such as a resistive film method, an optical method, a capacitive method, and an ultrasonic method, and is not limited to a specific example.

The audio input module 213 may receive an external sound signal by a microphone in a recording mode, a voice recognition mode, and the like and convert the received external sound signal into electrical voice data.

The communication unit 300 may be a module for communicating with external devices. The communication unit 300 may include a short-range communication unit 310 and a long-range communication unit 320. Each of the short-range communication unit 310 and the long-range communication unit 320 may include a transmission unit for transmitting information to an external device and a reception unit for receiving information from an external device.

The short-range communication unit 310, for example, may perform short-range communication SC with the first external device EE1, the second external device EE2, a first terminal PT1, and a second terminal PT2, which are disposed around. The short-range communication SC may be a two-way communication. The short-range communication SC may include, for example, communication using a Bluetooth module, communication using an infrared transceiver, or communication using Wi-Fi. However, this is exemplary, and the method of the short-range communication SC is not limited to the above example.

The long-range communication unit 320 may perform long-range communication LC with the first terminal PT1, the second terminal PT2, an email server EA, or a mobile communication device PN. The long-range communication LC may be two-way communication or one-way communication. The long-range communication LC may be, for example, communication using a mobile phone network such as CDMA, WCDMA, or LTE. However, this is exemplary, and the method of the long-range communication LC is not limited to the above example.

The memory 400 may include volatile memory and/or nonvolatile memory. The volatile memory may include DRAM, SRAM, or FeRAM. The nonvolatile memory may include NAND FLASH, SSD or HDD.

The memory 400 may store user authentication information and an address corresponding to the user authentication information. In addition, the memory 400 may store user interface information corresponding to user authentication information. The memory 400 may store user authentication information, addresses corresponding to the user authentication information, and user interfaces corresponding to the user authentication information in a lookup table format. However, this is illustrated as an example, and only the user authentication information and addresses corresponding to the user authentication information may be stored in the memory 400.

**[Table 1]**

| User authentication information | Address | User interface |
|---|---|---|
| USER 1 | E-mail address | Mode 1 |
| USER 2 | Phone number | Mode 1 |
| USER 3 | External device access information | Mode 2 |
| USER 4 | E-mail address | Mode 3 |
| USER 5 | Phone number | Mode 4 |

Table 1 exemplarily shows a lookup table stored in the memory 400. The external device may be the first terminal PT1, the second terminal PT2, a tablet, a notebook computer, or a computer. The access information may be IP information, Wi-Fi access information, or Bluetooth access information. The audio output module 500 may convert the sound data received from the communication unit 300 or the sound data stored in the memory 400 and output the converted data to the outside. The audio output module 500 may be a speaker. The audio output module 500 may be omitted.

The display panel 600 includes a plurality of pixels and may display an image. The display panel 600 may be a rigid display panel or a flexible display panel. The display panel 600 may be a liquid crystal display panel, an organic light emitting display panel, a quantum dot display panel, or a micro LED display panel. However, this is only an example, and the type of the display panel 600 is not limited to the example.

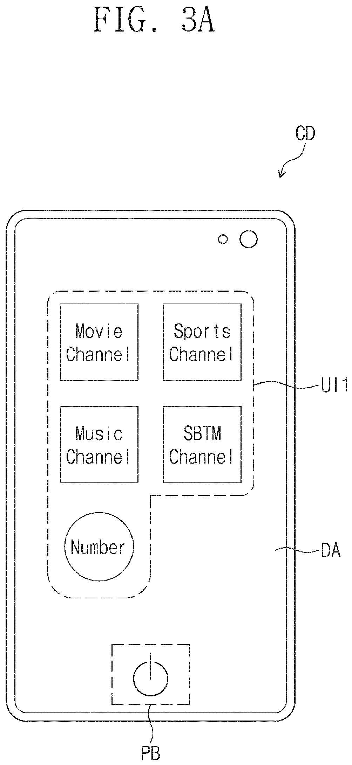

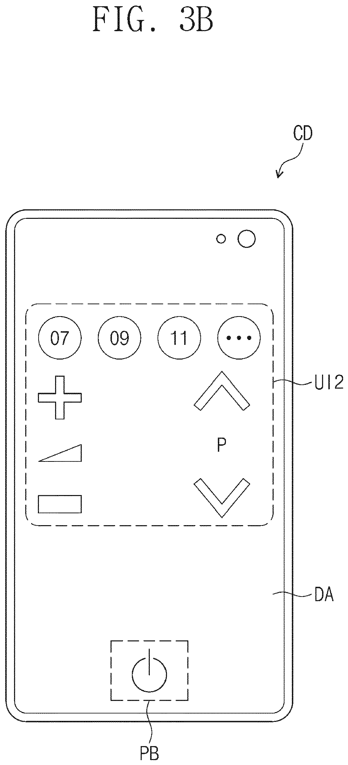

FIG. 3A is a diagram illustrating a user interface of a controller according to an embodiment of the inventive concept. FIG. 3B is a diagram illustrating a user interface of a controller according to an embodiment of the inventive concept.

Referring to FIGS. 3A and 3B, a power button PB may be displayed on a display area DA. When a signal is input to the power button PB, the controller CD may directly perform user authentication. Accordingly, after determining the user using the controller CD, a user interface corresponding thereto may be displayed on the display area DA. FIG. 3A illustrates a first user interface UI1, and FIG. 3B illustrates a second user interface UI2.

The first user interface UI1 may include folder icons and a number icon grouped by preference category. The second user interface UI2 may include a volume control icon, a channel control icon, and a favorite channel icon. For example, when the first user authentication information USER1 described in Table 1 is inputted, the controller CD may display the first user interface UI1 of mode 1. In addition, when the second user authentication information USER2 is inputted, the controller CD may display the second user interface UI2 of mode 2.

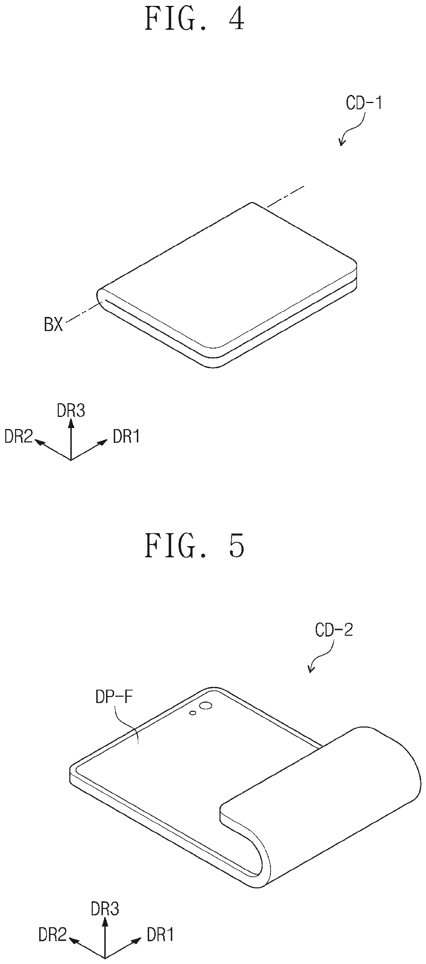

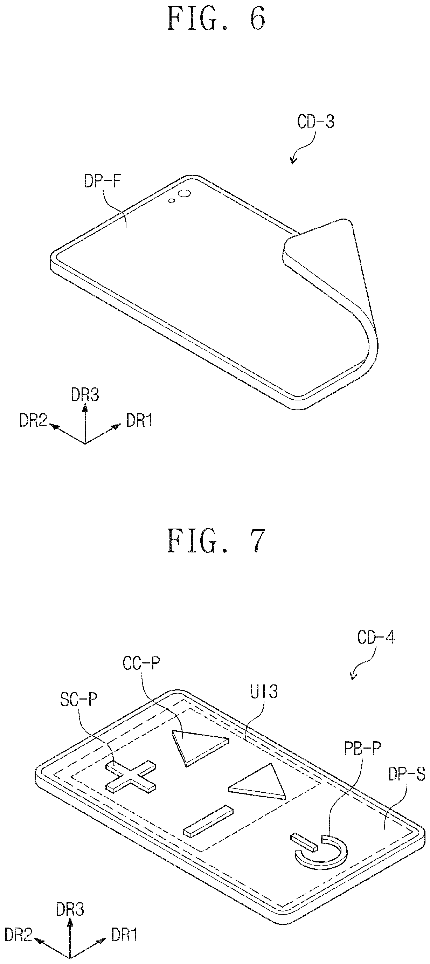

FIG. 4 is a perspective view of a controller according to an embodiment of the inventive concept. FIG. 5 is a perspective view of a controller according to an embodiment of the inventive concept. FIG. 6 is a perspective view of a controller according to an embodiment of the inventive concept.

Referring to FIG. 4, the controller CD-1 according to an embodiment of the inventive concept may be in-folded based on the bending axis BX. Further, although not shown in the drawing, the controller CD-1 may be out-folded based on the bending axis BX. The bending axis BX may extend along the short axis direction of the controller CD-1, for example, the first direction DR1. However, the inventive concept is not limited thereto, and the bending axis BX may extend along the long axis direction of the controller CD-1, for example, the second direction DR2.

Referring to FIG. 5, the controller CD-2 may be folded inward from the end. In addition, in another embodiment of the inventive concept, the controller CD-2 may be folded outward from the end.

Referring to FIG. 6, the controller CD-3 may be folded in a diagonal direction. Each of the controllers CD-1, CD-2, and CD-3 described with reference to FIGS. 4 to 6 may include a flexible display panel DP-F.

FIG. 7 is a perspective view of a controller according to an embodiment of the inventive concept.

Referring to FIG. 7, the controller CD-4 may include a stretchable display panel DP-S. A third user interface UI3 may have a three-dimensional shape. For example, the stretchable display panel DP-S in a flat state may be parallel to a plane defined by the first direction DR1 and the second direction DR2.

The thickness direction of the controller CD-4 may be indicated by the third direction DR3. A portion of the stretchable display panel DP-S may protrude in the third direction DR3. FIG. 7 exemplarily shows that a power icon PB-P, a volume control icon SC-P, and a channel control icon CC-P protrude in the third direction DR3.

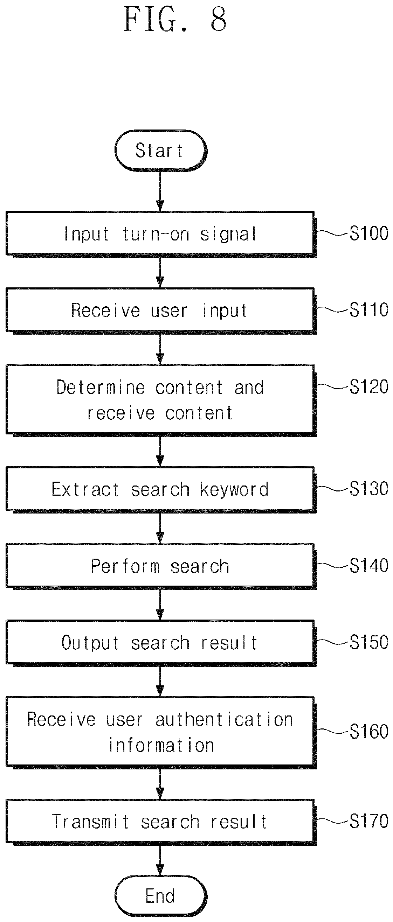

FIG. 8 is a flowchart showing the operation steps of a controller according to an embodiment of the inventive concept.

Referring to FIGS. 2, 3A, and 8, a turn-on signal may be inputted to the controller CD (S100). The turn-on signal may be inputted through the power button PB. When a turn-on signal is inputted, the controller CD may turn on the first external device EE1 or the second external device EE2 shown in FIG. 1.

The controller CD may receive a user input (S110). For example, a user input may be received through the input detection unit 212 or the audio input module 213 of the controller CD. The user input may be a request from a user, for example. For example, the user may input a request for content information to the controller CD through the input detection unit 212 or the audio input module 213.

The control unit 100 of the controller CD may determine content information and receive data corresponding to the content information from the outside (S120). For example, the controller CD may receive data from the first external device EE1 (see FIG. 1) or the second external device EE2 (see FIG. 1). For example, when the requested content is music, the controller CD may receive sound data from the first external device EE1 or the second external device EE2. In addition, when the requested content is person information, the controller CD may receive image data from the first external device EE1 or the second external device EE2. However, this is only an example, and data received by the controller CD according to the requested content is not limited to a specific example. For example, the data may include both image data and sound data.

The control unit 100 of the controller CD may extract the search keyword (S130). For example, if noise is included in the received data, it may be removed. For example, when image data is received from the first external device EE1 or the second external device EE2 in response to a request for product information, the control unit 100 extracts the displayed part of the product as a search keyword.

The controller CD may perform a search using the communication unit 300 (S140). The search step may use the short-range communication unit 310 or the long-range communication unit 320. According to an embodiment of the inventive concept, real-time search is possible through the controller CD, so that it may be easier to obtain information on content.

The controller CD may output a search result through the display panel 600 and/or the audio output module 500 (S150). In addition, the controller CD may output an image including a message asking the user to transmit the content search result on the display panel 600.

The user US may select whether to transmit the content search result. For example, when the user US wants to transmit a content search result, the controller CD may receive user authentication information through the sensor unit 200 (S160). The user authentication information may be at least one of a fingerprint, a voice, a face, an iris, and a blood vessel, but is not limited thereto.

The controller CD refers to the memory 400 in which the address corresponding to the user authentication information is stored, and transmits the content search result to the address through the communication unit 300 (S170).

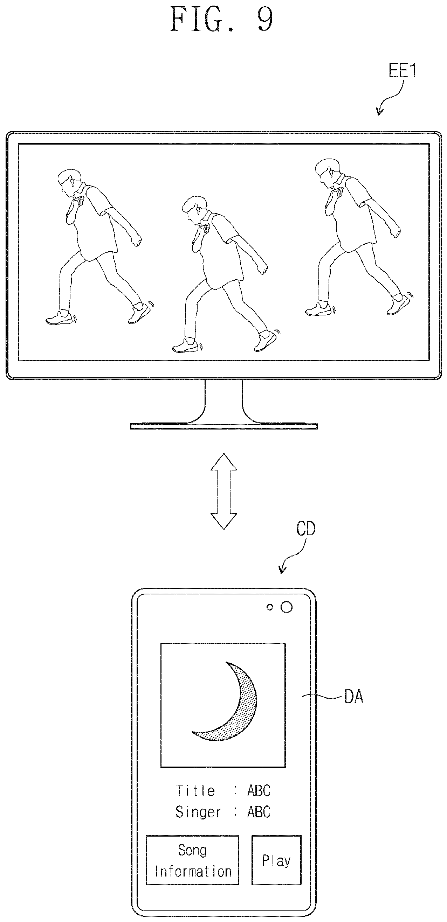

FIG. 9 is a state diagram illustrating an operation example of a controller according to an embodiment of the inventive concept.

Referring to FIGS. 1 and 9, the first external device EE1 may display an image. For example, a music program may be played on the first external device EE1. The user US may input a request for content information to the controller CD. For example, the user US may input a request for music information. The request for music information may be, for example, "What is this song?", "When is the song released?" or "Who's the song?"

The controller CD may receive data corresponding to the content from the first external device EE1 or the second external device EE2. The data may be, for example, sound data. The controller CD may search for content information based on the data, and may display the search result on the display area DA. For example, the controller CD may display song title and singer information.

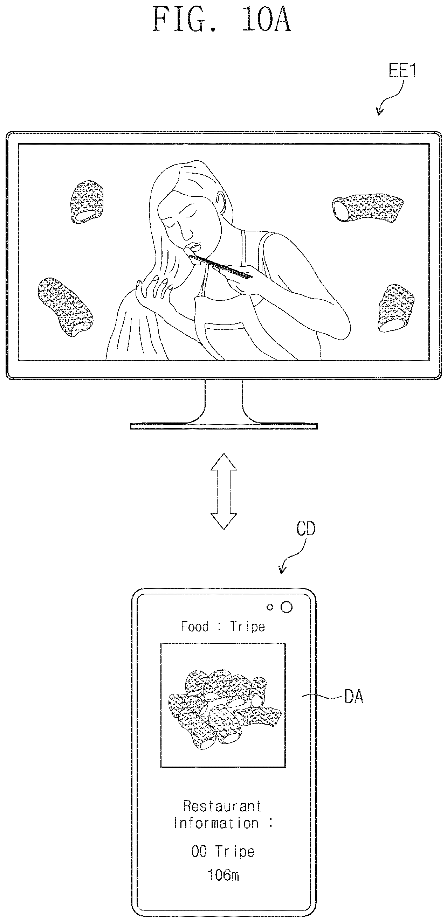

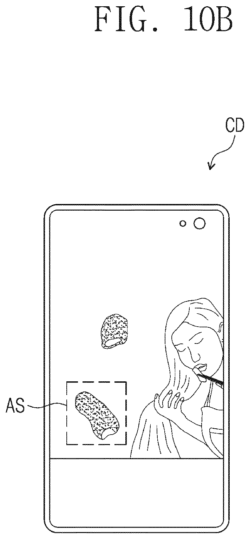

FIG. 10A is a state diagram illustrating an operation example of a controller according to an embodiment of the inventive concept. FIG. 10B is a state diagram illustrating an operation example of a controller according to an embodiment of the inventive concept.

Referring to FIGS. 1, 10A, and 10B, the first external device EE1 may display an image. For example, a screen in which a performer is eating food is shown on the first external device EE1. The user US may input a request for content information to the controller CD. For example, the user US may input a request for food information. The request for food information may be, for example, "What's the food name?" or 'Where's the restaurant that sells food?".

The controller CD may receive data corresponding to the content from the first external device EE1 or the second external device EE2. The data may be, for example, image data. The image data may be still image data or video data.

Referring to FIG. 10B, the user US or the control unit 100 (see FIG. 2) may extract a search keyword AS. For example, in relation to a request for food information, a performer displayed on the screen may correspond to noise. Therefore, the search accuracy may be improved through the step of extracting the search keyword AS. The step of extracting the search keyword AS may be performed through image analysis of the control unit 100, or may be performed through an operation in which the user US selects a part of the display screen.

The controller CD may search for content information based on the data, and may display the search result on the display area DA. For example, the controller CD may display food information, food image information, and nearby restaurant information. However, this is only an example, and the search result displayed on the display area DA may be variously changed.

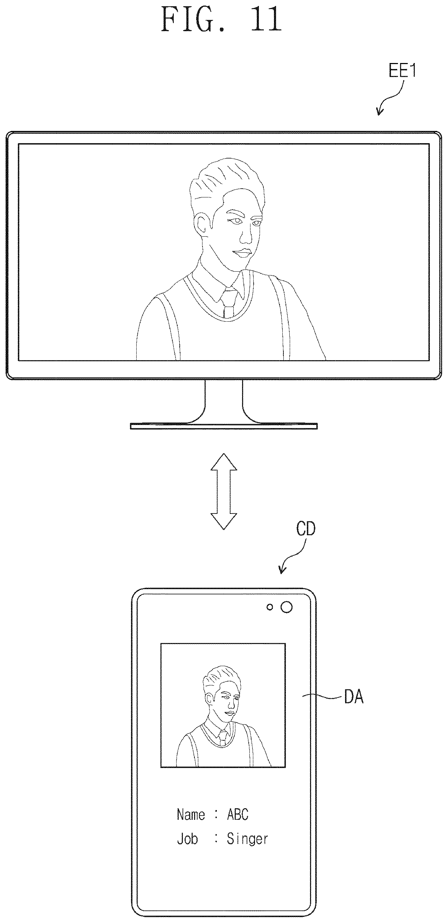

FIG. 11 is a state diagram illustrating an operation example of a controller according to an embodiment of the inventive concept.

Referring to FIGS. 1 and 11, the first external device EE1 may display an image. For example, an entertainment program may be played on the first external device EE1. The user US may input a content request to the controller CD. For example, the user US may input a request for person information. The request for person information may be, for example, "What is that person's name?" or "Who is that person?"

The controller CD may receive data corresponding to the content from the first external device EE1 or the second external device EE2. The data may be, for example, image data. The controller CD may search for content information based on the data, and may display the search result on the display area DA. For example, the controller CD may display a person's profile picture, name, and job information.

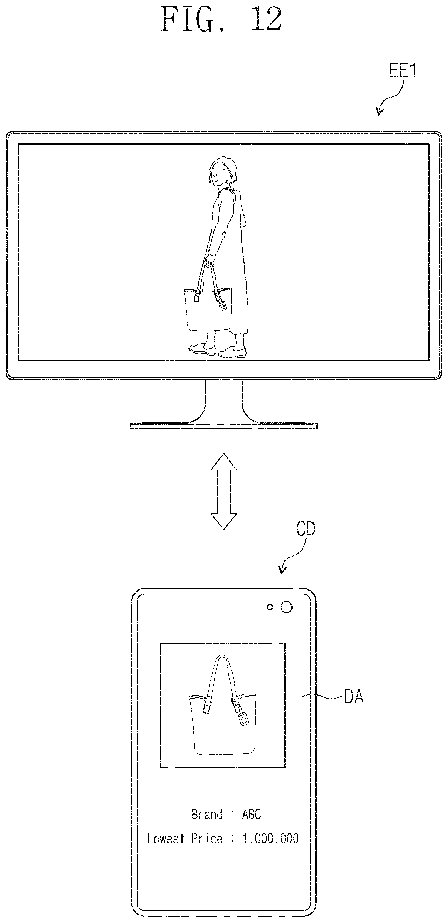

FIG. 12 is a state diagram illustrating an operation example of a controller according to an embodiment of the inventive concept.

Referring to FIGS. 1 and 12, the first external device EE1 may display an image. For example, a drama program may be played on the first external device EE1. The user US may input a content request to the controller CD. For example, the user US may input a request for product information. The request for product information may be, for example, "How much is that bag?" or "What is the brand of that bag?"

The controller CD may receive data corresponding to the content from the first external device EE1 or the second external device EE2. The data may be, for example, image data. The controller CD may search for content information based on the data, and may display the search result on the display area DA. For example, the controller CD may display product information, brand information, and price information.

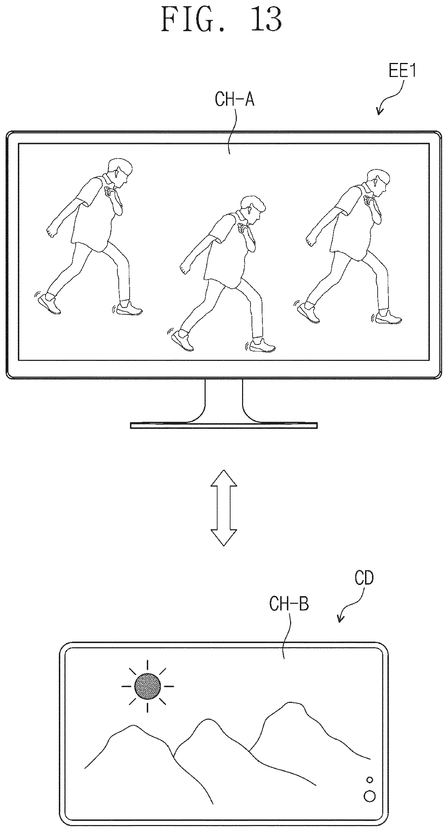

FIG. 13 is a state diagram illustrating an operation example of a controller according to an embodiment of the inventive concept.

Referring to FIG. 13, the first external device EE1 may display an image of a first channel CH-A, and the controller CD may display an image of a second channel CH-B. The first channel CH-A and the second channel CH-B may be different channels. The controller CD may receive image data of the second channel CH-B through the second external device EE2 (refer to FIG. 1). The image may be a video.

The user US (see FIG. 1) may preview another channel through the controller CD before changing the first channel CH-A played back in the first external device EE1 to another channel. Accordingly, the user US may obtain information on another channel through the controller CD without changing the channel of the first external device EE1 before selecting the channel.

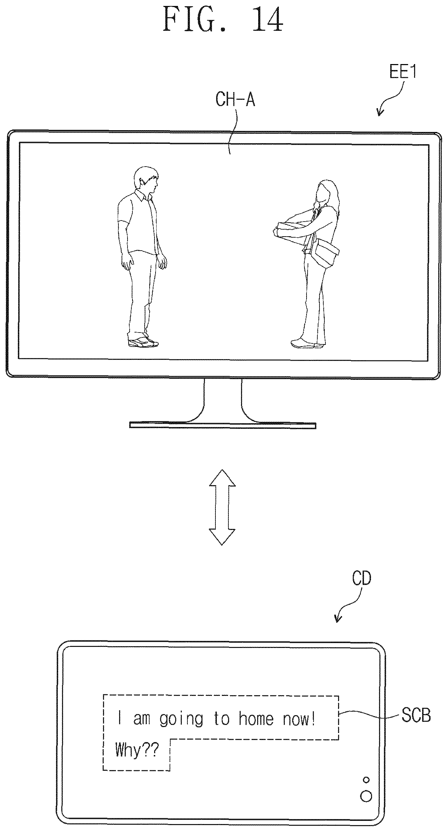

FIG. 14 is a state diagram illustrating an operation example of a controller according to an embodiment of the inventive concept.

Referring to FIG. 14, the first external device EE1 may display an image of the first channel CH-A, and the controller CD may display a caption SCB of the first channel CH-A.

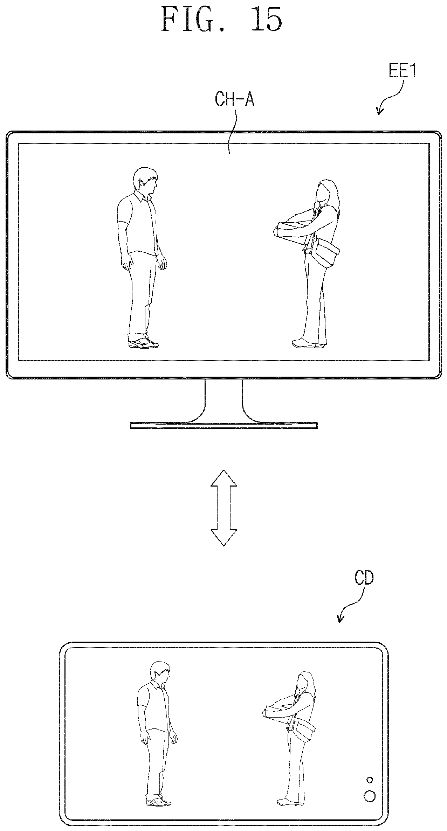

FIG. 15 is a state diagram illustrating an operation example of a controller according to an embodiment of the inventive concept.

Referring to FIG. 15, the first external device EE1 and the controller CD may display the same image. For example, an image of the first external device EE1 may be displayed on the controller CD, or an image of the controller CD may be displayed on the first external device EE1. That is, bidirectional mirroring between the first external device EE1 and the controller CD may be possible. In this case, when the user US (see FIG. 1) moves to a place where the first external device EE1 is not visible, the image of the first external device EE1 may be continuously viewed through the controller CD. Since the controller CD has a smaller display screen size than the first external device EE1, the operating frequencies may be different from each other. For example, the controller CD may be driven with a lower frequency than the first external device EE1 and may be driven with a lower power consumption.

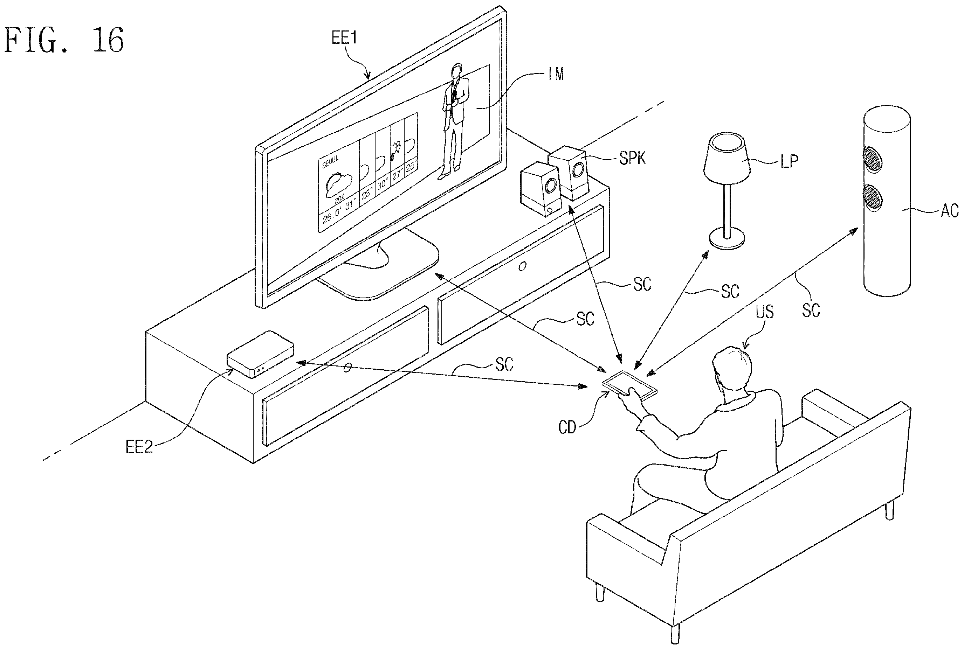

FIG. 16 shows an example of using a controller according to an embodiment of the inventive concept.

Referring to FIG. 16, the controller CD may control other external devices in addition to the first external device EE1 and the second external device EE2. For example, it is possible to control a temperature control device AC, a lighting device LP, or an audio output device SPK. The controller CD may output a control signal to the temperature control device AC, the lighting device LP, or the audio output device SPK through the communication unit 300 (see FIG. 2).

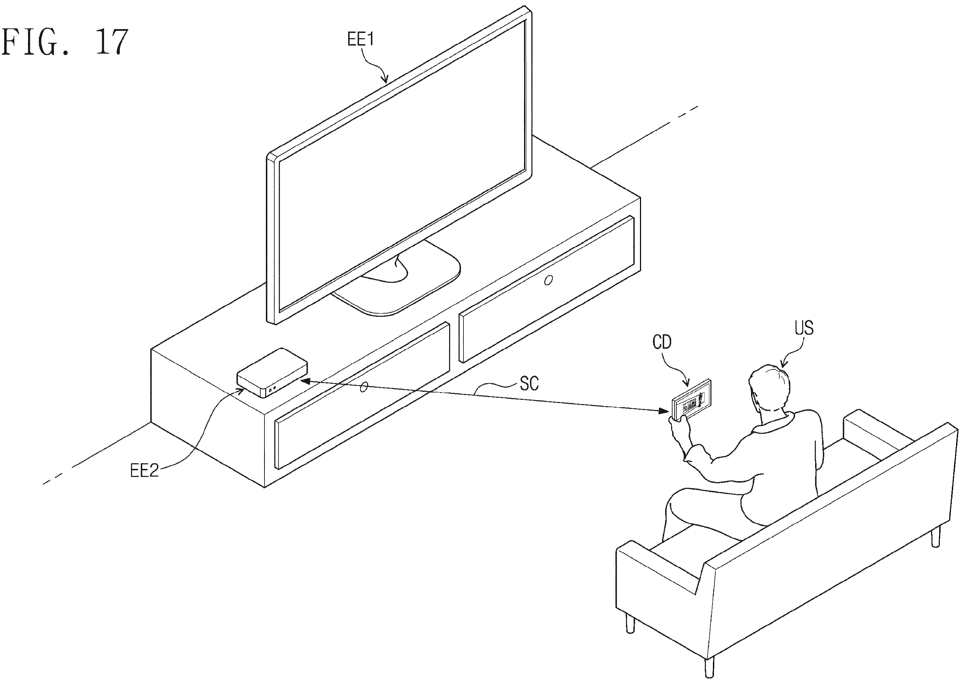

FIG. 17 shows an example of using a controller according to an embodiment of the inventive concept.

Referring to FIG. 17, the controller CD may receive data from the second external device EE2 before the first external device EE1 is turned on. An image corresponding to the data may be displayed on the display area DA of the controller CD. Accordingly, the user US may first select a channel and then turn on the first external device EE1.

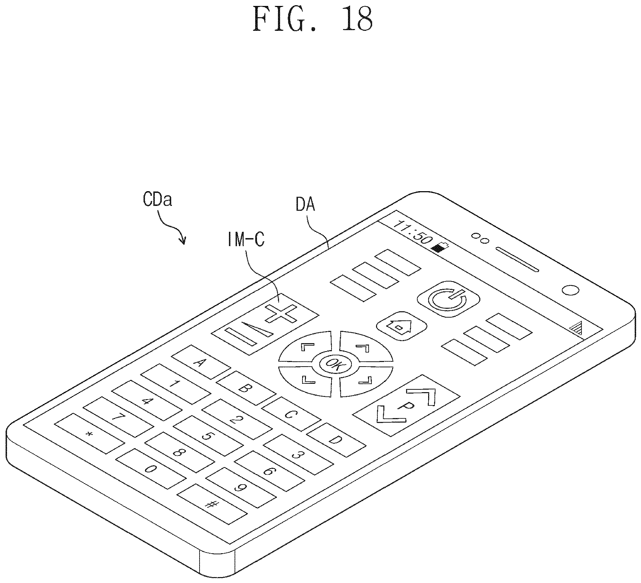

FIG. 18 illustrates a controller according to an embodiment of the inventive concept.

The control image IM-C is displayed on the display area DA of the controller CDa shown in FIG. 18, and the user may control the first external device EE1 (see FIG. 1) or the second external device EE2 (see FIG. 1) by touching the control image IM-C.

FIG. 18 illustrates a smartphone as an example of the controller CDa, but is not limited thereto, and the controller CDa may be a tablet PC, a watch type display device, or other wearable display device.

Although described above with reference to a preferred embodiment of the inventive concept, a person skilled in the relevant technical field or a person having ordinary knowledge in the relevant technical field will be appreciated that various modifications and changes may be made to the inventive concept without departing from the spirit and scope of the inventive concept described in the claims to be described later. Therefore, the technical scope of the inventive concept should not be limited to the content described in the detailed description of the specification, but should be determined by the claims.

### INDUSTRIAL APPLICABILITY

The inventive concept relates to a controller capable of short-range communication and long-range communication, and the controller may receive data corresponding to content from an external device and search for the data. In other words, it is possible to provide a controller that makes the process of acquiring information about the content easier, and thus has high industrial applicability.

## Claims

1. A controller comprising:
an input module configured to receive a content request;
a control unit configured to determine content based on the content request;
a communication unit configured to receive data corresponding to the content from a first external device and search for content information based on the data;
a display panel configured to display a search result for the content request;
a sensor unit configured to receive user authentication information; and
a memory configured to store the user authentication information and an address corresponding to the user authentication information,
wherein the communication unit transmits the search result to the address.

2. The controller of claim 1, wherein the input module comprises at least one of an input detection unit and an audio input module.

3. The controller of claim 1, wherein the data is at least one of sound data, still image data, and video data.

4. The controller of claim 1, wherein the user authentication information is at least one of ID and password, fingerprint, voice, face, iris, and blood vessel.

5. The controller of claim 1, wherein the sensor unit comprises at least one of a camera module, an input detection unit, a fingerprint detection unit, and an audio input module.

6. The controller of claim 1, wherein the address is an email address, a mobile phone number, or second external device access information.

7. The controller of claim 6, wherein the second external device access information is IP information, Wi-Fi access information, or Bluetooth access information.

8. The controller of claim 1, wherein the memory further stores user interface information corresponding to the user authentication information.

9. The controller of claim 1, wherein the first external device displays an image of a first channel, and the display panel displays an image of a second channel different from the first channel.

10. The controller of claim 9, further comprising an audio output module for outputting sound, wherein the audio output module outputs the sound of the second channel

11. The controller of claim 1, wherein the first external device and the display panel display the same image.

12. The controller of claim 1, wherein the first external device displays an image of a first channel, and the display panel displays a caption of the first channel.

13. The controller of claim 1, wherein the communication unit transmits a control signal to a second external device, and the second external device is a temperature control device, a lighting device, or a sound output device.

14. The controller of claim 1, wherein the first external device is a display device, and the display device communicates with a set-top box.

15. The controller of claim 14, wherein an image corresponding to the image data is displayed on the display panel by receiving image data from the set-top box before the first external device is turned on.

16. The controller of claim 1, wherein the first external device is a set-top box.

17. The controller of claim 1, wherein the display panel is a flexible display panel.

18. The controller of claim 1, wherein the display panel is a stretchable display panel.

19. A controller comprising:
an input module configured to receive a user's request;
a control unit configured to determine content based on the request;
a short-range communication unit configured to receive data corresponding to the content from a first external device;
a long-range communication unit configured to search for content information based on the data; and
a display panel configured to output the search result.

20. The controller of claim 19, further comprising:
a sensor unit configured to receive user authentication information; and
a memory configured to store the user authentication information and an address corresponding to the user authentication information,
wherein the short-range communication unit or the long-range communication unit transmits the search result to the address.
